# EUROPÄISCHE PATENTSCHRIFT

(11) **EP 3 069 863 B1**
(45) Veröffentlichungstag und Bekanntmachung des Hinweises auf die Patenterteilung: **26.06.2019**
(21) Anmeldenummer: 15198146.1
(22) Anmeldetag: 07.12.2015
(51) Int. Cl.: B29D 30/30, B60C 9/20, B60C 9/22

(54) **VERFAHREN ZUR HERSTELLUNG VON FAHRZEUGREIFEN**
METHOD FOR MANUFACTURING VEHICLE TYRES
PROCEDE DE FABRICATION DE PNEUS DE VEHICULE

(30) Priorität: 16.03.2015 DE 102015204701
(43) Veröffentlichungstag der Anmeldung: 21.09.2016
(73) Patentinhaber: Continental Reifen Deutschland GmbH, 30165 Hannover (DE)
(72) Erfinder: Ludwig, Reinhard, 31848 Bad Münder (DE); Bergmann, Sascha, 30179 Hannover (DE); Thiemann, Annalena, 31319 Sehnde (DE); Busche, Joachim, 31157 Sarstedt (DE)
(74) Vertreter: Widjaja, Wira

(56) Entgegenhaltungen:
- EP-A1- 0 455 454
- EP-A1- 2 561 980
- EP-A1- 2 801 486
- EP-A2- 0 333 628
- EP-A2- 1 167 003
- EP-A2- 2 657 047
- JP-A- 2007 069 408
- US-A1- 2007 144 649

## Beschreibung

Die Erfindung betrifft ein Verfahren zur Herstellung von Fahrzeugreifen.

Bei Fahrzeugreifen werden sogenannte Spulbandagen oberhalb des Reifengürtels eingesetzt. Die Spulbandage besteht aus einem Elastomermaterial, in dem übliche Festigkeitsträger eingebettet sind. Sie wird bei der Herstellung von Reifenrohlingen über den Reifengürtel gespult. Die Spulbandage hat insb. die Aufgabe, durch eine Versteifung des Reifens im sogenannten Crown-Bereich die Fahreigenschaften zu verbessern.

Spezielle Fahrzeugreifen haben eine hohe Sensibilität für Gürteltrennungen. Bei diesen Fahrzeugreifen werden spezielle Bereiche des Reifengürtels mit zwei Spulbandagenlagen abgedeckt. Bei der herkömmlichen Abdeckung der Gürtellagen mit zwei Spulbandagenlagen können sich Nachteile im Abriebverhalten des Reifens einstellen.

Aus der EP 2 657 047 A2 und EP 0 455 454 A1 ist jeweils ein Fahrzeugreifen mit einem zweilagigen Gürtel und einer Spulbandage bekannt, welche in den beiden Schulterbereichen und jeweils noch ein Stück Richtung Reifenzenit überlappend in Form einer versetzten Schindelung aufgespult ist. Die EP 0 333 628 A2 offenbart einen Fahrzeugreifen mit einer auf einem Gürtel aufgebrachten Spulbandage, deren Spulbandagenwicklungen einander über die gesamte Gürtelbreite schindelartig überlappen. Aus der EP 2 561 980 A1 ist ein Verfahren zur Herstellung eines Fahrzeugreifens bekannt, bei welchem eine Spulbandage über die Gürtelbreite derart aufgebracht wird, dass die Spulbandagenwicklungen Stoß an Stoß verlaufen.

Der Erfindung lag die Aufgabe zugrunde, ein Verfahren bereitzustellen, mit dem eine verbesserte Reifenkonstruktion erreicht wird.

Insbesondere soll die Abdeckung der 2. Gürtellage verbessert werden.

Gelöst wird die Aufgabe durch ein Verfahren mit folgenden Schritten:
a) Herstellung eines Reifenrohlings mit einer Reifenkarkasse, Seitenwände, Reifenwülsten mit einer oder mehreren Reifenaufbautrommeln,
b) Anordnen eines Reifengürtels mit zwei übereinander liegenden Gürtellagen auf einer Gürteltrommel,
   wobei die zweite Gürtellage schmäler ist als die erste Gürtellage
c) Aufbringen einer Spulbandage über dem Reifengürtel,
   wobei die Spulbandage eine Vielzahl von Festigkeitsträgern umfasst,
d) wobei der Spulprozess mit mindestens einem Spulkopf erfolgt,
   wobei eine schmale Spulbandage mit einer Streifenbreite von 10 mm über der Gürtellage aufgespult wird,
e) wobei der Spulprozess im ersten Randbereich des Gürtels über der ersten Gürtelkante mit einer Trommeldrehung ohne einen Vorschub des Spulkopfes in axialer Richtung beginnt,
   wobei die erste Gürtelkante nur mit einer ersten Spulbandagenlage überdeckt wird,
f) wobei nachfolgend der Spulkopf über einen Vorschub in axialer Richtung verfahren wird und dabei über die zweite Gürtelkante eine zweite Spulbandagenlage in Form einer versetzten Schindelung über der ersten Spulbandagenlage aufgespult wird,
g) wobei nachfolgend der Spulkopf über einen weiteren Vorschub in axialer Richtung verfahren wird und dabei über die zweite Spulbandagenlage eine dritte Spulbandagenlage in Form einer versetzten Schindelung aufgespult wird,
   wobei lediglich die erste, zweite und dritte Spulbandagenlagen (7, 8, 9) in Form einer versetzten Schindelung angeordnet werden
h) Fortsetzen des Spulprozesses,
   wobei der Spulkopf mit einer konstanten Vorschubbewegung in axialer Richtung bewegt wird und
   wobei der Reifengürtel im mittleren Bereich nachfolgend mit einer einlagigen Spulbandage überdeckt wird,
i) Anordnen des Laufstreifens am Reifenrohling,
j) Fertigstellung des Fahrzeugreifens mit weiteren Schritten.

Ein Vorteil der Erfindung ist insbesondere darin zu sehen, dass durch das erfindungsgemäße Verfahren die Fahreigenschaften des Reifens und das Handling der Fahrzeugreifen wesentlich verbessert werden. Durch die gemäß dem Hauptanspruch aufgebrachte Spulbandage wird insb. die Abdeckung der zweiten Gürtellage wesentlich verbessert.

Die bessere Abdeckung der zweiten Gürtellage wird dadurch erzielt, dass im Randbereich des Reifengürtels die Spulbandage nur über eine Umdrehung ohne Vorschub aufgebracht wird. Anschließend wird über der zweiten Gürtelkante die Spulbandage mit einem verringerten Vorschub übereinander geschindelt. Der Fahrzeugreifen erhält durch diese neuartige Herstellungsmethode ein verbessertes Abriebbild, wobei gleichzeitig der Rollwiderstand wesentlich reduziert wird.

In einer vorteilhaften Weiterbildung der Erfindung ist vorgesehen, dass nach Schritt h) ein Fortsetzten des Spulprozesses bis zum zweiten Randbereich des Gürtels erfolgt,
wobei der Spulprozess im zweiten Randbereich des Gürtels über der ersten Gürtelkante mit einer Trommeldrehung ohne einen Vorschub des Spulkopfes in axialer Richtung endet, wobei die erste Gürtelkante im zweiten Randbereich des Reifengürtels nur mit einer ersten Spulbandagenlage überdeckt wird.

Auf diese Weise wird auf beiden Seiten des Reifengürtels eine optimale Abdeckung der zweiten Gürtelkante erreicht.

In einer weiteren vorteilhaften Weiterbildung der Erfindung ist vorgesehen, dass bei Schritt e) die erste Spulbandagenlage derart angeordnet wird, dass der Abstand zwischen der äußeren Kante der ersten Spulbandagenlage und der 1. Gürtelkante zwischen 3 und 6 mm beträgt.

Auf diese Weise wird eine optimale Abdeckung der ersten Gürtelkante erreicht.

In einer weiteren vorteilhaften Weiterbildung der Erfindung ist vorgesehen, dass bei Schritt f) die zweite Spulbandagenlage mit einem Vorschub des Spulkopfes in axialer Richtung von 5 mm pro Trommelumdrehung über der ersten Spulbandagenlage angeordnet wird. Auf diese Weise wird eine optimale Abdeckung der zweiten Gürtelkante erreicht, wodurch insbesondere das Abriebverhalten des Fahrzeugreifens verbessert wird.

In einer weiteren vorteilhaften Weiterbildung der Erfindung ist vorgesehen, dass nach Schritt f) die dritte Spulbandagenlage mit einem Vorschub des Spulkopfes in axialer Richtung von 5 mm pro Trommelumdrehung über der zweiten Spulbandagenlage angeordnet wird, wobei die erste, zweite und dritte Spulbandagenlagen in Form einer versetzten Schindelung angeordnet werden.
Dadurch wird eine optimale Abdeckung der ersten und zweiten Gürtelkante erreicht. Durch diese Maßnahme wird die statische und dynamische Kontur des Reifengürtels positiv beeinflusst.

In einer weiteren vorteilhaften Weiterbildung der Erfindung ist vorgesehen, dass nach Schritt f) die weiteren Spulbandagenlagen mit einem Vorschub des Spulkopfes in axialer Richtung von 10 mm pro Trommelumdrehung über der ersten Gürtellage angeordnet werden.
Dadurch wird eine optimale Abdeckung des mittleren Bereichs des Reifengürtels erreicht.

In einer weiteren vorteilhaften Weiterbildung der Erfindung ist vorgesehen, dass nach Schritt f) die weiteren Spulbandagenlagen mit einem Vorschub des Spulkopfes in axialer Richtung von 15 mm pro Trommelumdrehung über der ersten Gürtellage angeordnet werden, wobei zwischen den einzelnen Spulbandagenlagen Materiallücken von 5 mm angeordnet werden.
Auf diese Weise wird eine Gewichtsreduzierung bei der Spulbandage erreicht, wobei gleichzeitig die statische Kontur des Reifengürtels nicht wesentlich verändert wird.

Anhand eines Ausführungsbeispiels soll die Erfindung näher erläutert werden. Es zeigt:
- Fig. 1:: ein Ausführungsbeispiel des erfindungsgemäßen Verfahrens
- Fig. 2:: ein weiteres Ausführungsbeispiel des Verfahrens

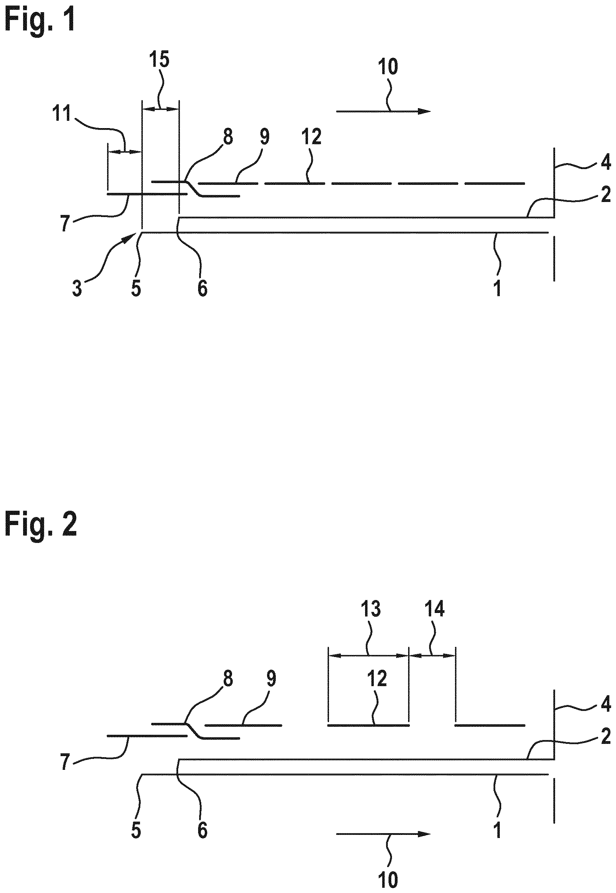

Die Figur 1 zeigt ein Ausführungsbeispiel des Verfahrens.

Der Reifengürtel setzt sich aus der ersten Gürtellage 1 und der darüber liegenden zweiten Gürtellage 2 zusammen. Unterhalb des Reifengürtels befindet sich der nicht dargestellte Reifenrohling mit der Reifenkarkasse. Der Reifengürtel und die darüber liegende Spulbandage ist in einer Radialschnittansicht dargestellt. Die axiale Reifenmitte 4 befindet sich im mittleren Bereich des Reifengürtels. Die erste Gürtellage 1 weist am Rand eine erste Gürtelkante 5 auf. Die zweite Gürtellage 2 ist schmaler als die erste Gürtellage und weist eine zweite Gürtelkante 6 auf. Auf der linken Seite des Reifengürtels befindet sich der erste Randbereich 3 des Reifengürtels. Der Spulprozess mit der Spulbandage, die um den Reifengürtel gewickelt wird, beginnt im ersten Randbereich 3 des Reifengürtels. Bei diesem Vorgang wird die erste Spulbandagenlage 7 so über den Reifengürtel gespult, dass die erste Gürtelkante 5 vollständig abgedeckt wird. Bei diesem Spulprozess im ersten Randbereich 3 des Gürtels wird die Spulbandage 7 über die erste Gürtelkante 5 gespult, wobei kein Vorschub des Spulkopfes in axialer Richtung 10 erfolgt. Nachfolgend wird der nicht dargestellte Spulkopf über einen Vorschub in axialer Richtung 10 verfahren. Bei diesem Vorgang wird über die zweite Gürtelkante 6 eine zweite Spulbandagenlage 8 in Form einer versetzten Schindelung über der ersten Spulbandage aufgespult. Anschließend wird der Spulkopf über einen weiteren Vorschub in axialer Richtung 10 verfahren. Bei diesem Vorgang wird über die zweite Spulbandagenlage 8 eine dritte Spulbandagenlage 9 in Form einer versetzten Schindelung aufgebracht. Durch diesen Vorgang werden beide Gürtelkanten 5 und 6 optimal mit der darüber liegenden Spulbandage abgedeckt. Nachfolgend wird die vierte Spulbandagenlage 12 und weitere Spulbandagenlagen in axialer Richtung 10 über den dargestellten Reifengürtel aufgespult. Der Abstand 11 zeigt den Abstand zwischen der äußeren Kante der ersten Spulbandagenlage 7 und der ersten Gürtellage 3, wobei dieser Abstand vorzugsweise zwischen 3 bis 6mm beträgt. Der Abstand 15 zeigt den Abstand zwischen der ersten Gürtelkante 5 und der zweiten Gürtelkante 6. Die Breite der einzelnen Spulbandagenlagen 7, 8, 9 und 12 beträgt bei diesem Ausführungsbeispiel ca. 10mm.

Die Fig. 2 zeigt ein zweites Ausführungsbeispiel mit einer anderen Spulbandagenanordnung im mittleren Bereich des Reifengürtels. Die erste, zweite und dritte Spulbandagenlagen 7, 8 und 9 werden über der ersten Gürtelkante 5 und 6 wie bei dem Ausführungsbeispiel in der Fig. 1 angeordnet. Beim Aufspulen der zweiten und dritten Spulbandagenlage 8 und 9 beträgt die Vorschubgeschwindigkeit des Spulkopfes ca. 5mm pro Trommelumdrehung. Die vierte Spulbandagenlage 12 wird hingegen mit einer deutlich höheren axialen Vorschubgeschwindigkeit des Spulkopfes aufgewickelt. Ab der vierten Spulbandagenlage 12 wird eine axiale Vorschubgeschwindigkeit von ca. 15mm pro Trommelumdrehung appliziert. Durch diese Vorschubgeschwindigkeit entstehen Materiallücken mit einer Breite 14, die zwischen den einzelnen Spulbandagenlagen angeordnet sind. Die Breite der Materiallücken beträgt ca. 5mm.

### Bezugszeichenliste

### (ist Teil der Beschreibung)

- 1: Erste Gürtellage
- 2: Zweite Gürtellage
- 3: erster Randbereich des Reifengürtels
- 4: axiale Reifenmitte
- 5: erste Gürtelkante
- 6: zweite Gürtelkante
- 7: erste Spulbandagenlage
- 8: zweite Spulbandagenlage
- 9: dritte Spulbandagenlage
- 10: axiale Richtung
- 11: Abstand zwischen äußerer Kante der ersten Spulbandagenlage und der ersten Gürtelkante: ca. 3 bis 6 mm
- 12: vierte Spulbandagenlage
- 13: Breite der Spulbandagenlage: ca. 10 mm
- 14: Breite der Materiallücken zwischen den Spulbandagenlagen: ca. 5 mm
- 15: Abstand zwischen 1. und 2. Gürtelkante

## Patentansprüche

1. Verfahren zur Herstellung von PKW-Reifen mit folgenden Schritten:
a) Herstellung eines Reifenrohlings mit einer Reifenkarkasse, Seitenwände, Reifenwülsten mit einer oder mehreren Reifenaufbautrommeln,
b) Anordnen eines Reifengürtels mit zwei übereinander liegenden Gürtellagen (1, 2) auf einer Gürteltrommel,
wobei die zweite Gürtellage (2) schmäler ist als die erste Gürtellage (1)
c) Aufbringen einer Spulbandage (7, 8, 9, 12) über dem Reifengürtel,
wobei die Spulbandage (7, 8, 9, 12) eine Vielzahl von Festigkeitsträgern umfasst,
d) wobei der Spulprozess mit mindestens einem Spulkopf erfolgt,
wobei eine schmale Spulbandage (7, 8, 9, 12) mit einer Streifenbreite von 10 mm über dem Reifenprofil aufgespult wird,
e) wobei der Spulprozess im ersten Randbereich (3) des Reifengürtels über der ersten Gürtelkante (5) mit einer Trommeldrehung ohne einen Vorschub des Spulkopfes in axialer Richtung (10) beginnt,
wobei die erste Gürtelkante (5) nur mit einer ersten
Spulbandagenlage (7) überdeckt wird,
f) wobei nachfolgend der Spulkopf über einen Vorschub in axialer Richtung (10) verfahren wird und dabei über die zweite Gürtelkante (6) eine zweite Spulbandagenlage (8) in Form einer versetzten Schindelung über der ersten Spulbandagenlage (7) aufgespult wird,
g) wobei nachfolgend der Spulkopf über einen weiteren Vorschub in axialer Richtung (10) verfahren wird und dabei über die zweite Spulbandagenlage (8) eine dritte Spulbandagenlage (9) in Form einer versetzten Schindelung aufgespult wird, wobei lediglich die erste, zweite und dritte Spulbandagenlagen (7, 8, 9) in Form einer versetzten Schindelung angeordnet werden,
h) Fortsetzen des Spulprozesses,
wobei der Spulkopf mit einer konstanten Vorschubbewegung in axialer Richtung (10) bewegt wird und
wobei der Reifengürtel im mittleren Bereich nachfolgend mit einer einlagigen Spulbandage überdeckt wird,
i) Anordnen des Laufstreifens am Reifenrohling,
j) Fertigstellung des Fahrzeugreifens mit weiteren Schritten.

2. Verfahren nach Anspruch 1,
**dadurch gekennzeichnet, dass**
nach Schritt h) ein Fortsetzten des Spulprozesses bis zum zweiten Randbereich des Reifengürtels erfolgt,
wobei der Spulprozess im zweiten Randbereich des Reifengürtels über der ersten Gürtelkante mit einer Trommeldrehung ohne einen Vorschub des Spulkopfes in axialer Richtung (10) endet,
wobei die erste Gürtelkante im zweiten Randbereich des Reifengürtels nur mit einer Spulbandagenlage überdeckt wird

3. Verfahren nach einem der vorhergehenden Ansprüche,
**dadurch gekennzeichnet, dass**
bei Schritt e) die erste Spulbandagenlage (7) derart angeordnet wird,
dass der Abstand (11) zwischen der äußeren Kante der ersten Spulbandage (7) der ersten Gürtelkante zwischen 3 und 6 mm beträgt.

4. Verfahren nach einem der vorhergehenden Ansprüche,
**dadurch gekennzeichnet, dass**
bei Schritt f) die zweite Spulbandagenlage (8) mit einem Vorschub des Spulkopfes in axialer Richtung von 5 mm pro Trommelumdrehung über der ersten Spulbandagenlage (7) angeordnet wird.

5. Verfahren nach einem der vorhergehenden Ansprüche,
**dadurch gekennzeichnet, dass**
nach Schritt f) die dritte Spulbandagenlage (9) mit einem Vorschub des Spulkopfes in axialer Richtung (10) von 5 mm pro Trommelumdrehung über der zweiten Spulbandagenlage (8) angeordnet wird,
wobei die erste, zweite und dritte Spulbandagenlagen (7, 8, 9) in Form einer versetzten Schindelung angeordnet werden.

6. Verfahren nach einem der vorhergehenden Ansprüche,
**dadurch gekennzeichnet, dass**
nach Schritt f) die weiteren Spulbandagenlagen (12) mit einem Vorschub des Spulkopfes in axialer Richtung von 10 mm pro Trommelumdrehung über der zweiten Gürtellage (2) angeordnet werden.

7. Verfahren nach einem der vorhergehenden Ansprüche,
**dadurch gekennzeichnet, dass**
nach Schritt f) die weiteren Spulbandagenlagen (12) mit einem Vorschub des Spulkopfes in axialer Richtung (10) von 15 mm pro Trommelumdrehung über der zweiten Gürtellage angeordnet werden,
wobei zwischen den einzelnen Spulbandagenlagen (12) Materiallücken (14) von 5 mm angeordnet werden.

## Claims

1. Method for manufacturing passenger vehicle tyres, comprising the following steps:
a) manufacturing a tyre blank having a tyre carcass, sidewalls and tyre beads with one or more tyre building drums,
b) arranging a tyre breaker belt having two breaker belt layers (1, 2) lying one above the other on a breaker belt drum,
wherein the second breaker belt layer (2) is narrower than the first breaker belt layer (1),
c) applying a winding bandage (7, 8, 9, 12) over the tyre breaker belt,
wherein the winding bandage (7, 8, 9, 12) comprises a multiplicity of reinforcing elements,
d) wherein the winding process takes place with at least one winding head,
wherein a narrow winding bandage (7, 8, 9, 12) having a strip width of 10 mm is wound on over the tyre profile,
e) wherein the winding process begins in the first peripheral region (3) of the tyre breaker belt over the first breaker belt edge (5) with a drum rotation without advancing of the winding head in the axial direction (10),
wherein the first breaker belt edge (5) is overlapped only with a first winding bandage layer (7),
f) wherein subsequently the winding head is moved by advancing in the axial direction (10) and, in the process, a second winding bandage layer (8) is wound on over the second breaker belt edge (6) in the form of offset shingling over the first winding bandage layer (7),
g) wherein subsequently the winding head is moved by further advancing in the axial direction (10) and, in the process, a third winding bandage layer (9) is wound on over the second winding bandage layer (8) in the form of offset shingling,
wherein only the first, second and third winding bandage layers (7, 8, 9) are arranged in the form of offset shingling,
h) continuing the winding process,
wherein the winding head is moved with a constant advancing movement in the axial direction (10), and wherein the tyre breaker belt is subsequently overlapped in the central region by a single-layered winding bandage,
i) arranging the tread on the tyre blank,
j) completing the vehicle tyre with further steps.

2. Method according to Claim 1, **characterized in that** after step h) the winding process is continued as far as the second peripheral region of the tyre breaker belt,
wherein the winding process ends in the second peripheral region of the tyre breaker belt over the first breaker belt edge with a drum rotation without advancing of the winding head in the axial direction (10),
wherein the first breaker belt edge is overlapped in the second peripheral region of the tyre breaker belt only by one winding bandage layer.

3. Method according to either of the preceding claims, **characterized in that**
in step e), the first winding bandage layer (7) is arranged in such a manner
that the distance (11) between the outer edge of the first winding bandage (7) of the first breaker belt edge is between 3 and 6 mm.

4. Method according to one of the preceding claims,
**characterized in that**
in step f), the second winding bandage layer (8) is arranged over the first winding bandage layer (7) with advancing of the winding head in the axial direction by 5 mm per drum revolution.

5. Method according to one of the preceding claims,
**characterized in that**
after step f) the third winding bandage layer (9) is arranged over the second winding bandage layer (8) with advancing of the winding head in the axial direction (10) by 5 mm per drum revolution, wherein the first, second and third winding bandage layers (7, 8, 9) are arranged in the form of offset shingling.

6. Method according to one of the preceding claims,
**characterized in that**
after step f), the further winding bandage layers (12) are arranged over the second breaker belt layer (2) with advancing of the winding head in the axial direction by 10 mm per drum revolution.

7. Method according to one of the preceding claims,
**characterized in that**
after step f), the further winding bandage layers (12) are arranged over the second breaker belt layer with advancing of the winding head in the axial direction (10) by 15 mm per drum revolution, wherein material gaps (14) of 5 mm are arranged between the individual winding bandage layers (12).

## Revendications

1. Procédé de fabrication de pneus de voiture, présentant les étapes suivantes:
a) fabrication d'une ébauche de pneu avec une carcasse de pneu, des flancs, des talons de pneu avec un ou plusieurs tambours de construction de pneu,
b) agencement d'une ceinture de pneu avec deux nappes de ceinture situées l'une au-dessus de l'autre sur un tambour de ceinture,
dans lequel la deuxième nappe de ceinture (2) est plus étroite sur la première nappe de ceinture (1),
c) pose d'un bandage d'enroulement (7, 8, 9, 12) au-dessus de la ceinture de pneu, dans lequel le bandage d'enroulement (7, 8, 9, 12) comprend une multiplicité d'éléments de résistance,
d) dans lequel le processus d'enroulement est effectué avec au moins une tête d'enroulement,
dans lequel un bandage d'enroulement étroit (7, 8, 9, 12) avec une largeur de bande de 10 mm est enroulé au-dessus du profil de pneu,
e) dans lequel le processus d'enroulement commence dans la première région de bord (3) de la ceinture de pneu sur le premier côté de ceinture (5) avec une rotation du tambour sans avancement de la tête d'enroulement en direction axiale (10),
dans lequel le premier côté de ceinture (5) n'est recouvert qu'avec une première couche de bandage d'enroulement (7),
f) dans lequel la tête d'enroulement est ensuite déplacée d'un avancement en direction axiale (10) et une deuxième couche de bandage d'enroulement (8) est en l'occurrence enroulée au-dessus du deuxième côté de ceinture (6) sous la forme d'une imbrication décalée au-dessus de la première couche de bandage d'enroulement (7),
g) dans lequel la tête d'enroulement est ensuite déplacée d'un nouvel avancement en direction axiale (10) et une troisième couche de bandage d'enroulement (9) est en l'occurrence enroulée au-dessus de la deuxième couche de bandage d'enroulement (8) sous la forme d'une imbrication décalée,
dans lequel seules les première, deuxième et troisième couches de bandage d'enroulement (7, 8, 9) sont disposées sous la forme d'une imbrication décalée,
h) poursuite du processus d'enroulement,
dans lequel la tête d'enroulement est déplacée avec une vitesse d'avancement constante en direction axiale (10), et
dans lequel la ceinture de pneu est ensuite recouverte dans la région centrale avec un bandage d'enroulement en une couche,
i) agencement de la bande de roulement sur l'ébauche de pneu,
j) finition du pneu de véhicule avec d'autres étapes.

2. Procédé selon la revendication 1, **caractérisé en ce qu'**après l'étape h) on effectue une poursuite du processus d'enroulement jusqu'à la deuxième région de bord de la ceinture de pneu,
dans lequel le processus d'enroulement se termine dans la deuxième région de bord de la ceinture de pneu au-dessus du premier côté de ceinture avec une rotation du tambour sans avancement de la tête d'enroulement en direction axiale (10),
dans lequel le premier côté de ceinture n'est recouvert dans la deuxième région de bord de la ceinture de pneu que par une couche de bandage d'enroulement.

3. Procédé selon l'une quelconque des revendications précédentes, **caractérisé en ce qu'**à l'étape e) la première couche de bandage d'enroulement (7) est disposée de telle manière que la distance (11) entre le côté extérieur du premier bandage d'enroulement (7) du premier côté de ceinture vaut entre 3 et 6 mm.

4. Procédé selon l'une quelconque des revendications précédentes, **caractérisé en ce qu'**à l'étape f) la deuxième couche de bandage d'enroulement (8) est disposée au-dessus de la première couche de bandage d'enroulement (7) avec un avancement de la tête d'enroulement en direction axiale de 5 mm par tour du tambour.

5. Procédé selon l'une quelconque des revendications précédentes, **caractérisé en ce qu'**après l'étape (f) la troisième couche de bandage d'enroulement (9) est disposée au-dessus de la deuxième couche de bandage d'enroulement (8) avec un avancement de la tête d'enroulement en direction axiale (10) de 5 mm par tour du tambour,
dans lequel les première, deuxième et troisième couches de bandage d'enroulement (7, 8, 9) sont disposées sous la forme d'une imbrication décalée.

6. Procédé selon l'une quelconque des revendications précédentes, **caractérisé en ce qu'**après l'étape f) les autres couches de bandage d'enroulement (12) sont
disposées au-dessus de la deuxième nappe de ceinture (2) avec un avancement de la tête d'enroulement en direction axiale de 10 mm par tour du tambour.

7. Procédé selon l'une quelconque des revendications précédentes, **caractérisé en ce qu'**après l'étape f) les autres couches de bandage d'enroulement (12) sont disposées au-dessus de la deuxième nappe de ceinture avec un avancement de la tête d'enroulement en direction axiale (10) de 15 mm par tour du tambour,
dans lequel des espaces vides de matière (14) de 5 mm sont disposés entre les couches de bandage d'enroulement individuelles (12).
